Europäisches Patentamt

European Patent Office

Office européen des brevets

(11) Publication number: **0 472 242 A1**

## EUROPEAN PATENT APPLICATION

(21) Application number: **91202129.2**

(22) Date of filing: **20.08.91**

(51) Int. Cl.5: **B03B 9/06**, B07B 13/07

(30) Priority: **20.08.90 NL 9001846**

(43) Date of publication of application:
**26.02.92 Bulletin 92/09**

(84) Designated Contracting States:
**AT BE CH DE DK ES FR GB GR IT LI LU NL SE**

(71) Applicant: **Rozendaal, Teunis**
**Burg. Patijnlaan 68**
**NL-3705 CG Zeist(NL)**

(72) Inventor: **Rozendaal, Teunis**
**Burg. Patijnlaan 68**
**NL-3705 CG Zeist(NL)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Method for separating waste.**

(57) The invention provides a method for mechanically separating for instance building/demolition waste by first separating from the waste material mass a fraction with small dimensions and subsequently sorting the remaining part of the waste material mass according to length, wherein the separated small fraction is separated in a number of steps according to volume into part-fractions and wherein of at least one of the part-fractions the fraction with the lowest weight is separated.

FIG.1

The invention relates to a method for mechanically separating waste, for example from building or demolition.

The processing of waste by separating thereof into re-usable and other fractions is becoming increasingly more important partly due to the growing concern for the environment. Removing re-usable materials from the waste has a dual purpose. On the one hand it brings about a considerable decrease in the volume of the waste resulting in reduced burning or storage, which leads to a reduced environmental impact. On the other hand the re-use of materials can have a cost saving effect.

Devices for separating waste are already known. Use is made herein inter alia of sieving, reducing and manual removal of large constituents such as beams and the like from the waste. This latter is heavy and unpleasant work.

The invention has for its object to provide a method for separating waste e.g. from building or demolition into fractions wherein manual pre-sorting can be omitted.

This is achieved by the invention by first mechanically separating from the waste material mass a fraction with small dimensions and subsequently sorting the remaining part of the waste material mass according to length, wherein the separated small fraction is separated in a number of steps according to volume into part-fractions and wherein of at least one of the part-fractions the fraction with the lowest weight is separated. Separation of the small fraction and sorting according to length preferably take place by carrying the waste material mass over oppositely rotating screw conveyors provided at regular intervals along the periphery with pins. The small material falls through between both screw conveyors into a collecting bin. The long material is deflected by the pins from the conveying direction, while the large material is further transported and at the end of the screw conveyors drops into a collecting bin. Manual removal of long and large portions from the waste material mass can thus be dispensed with.

The screw conveyors can be arranged in different ways. In addition to parallel placing, a tapering gap can be enclosed by the screw conveyors. With this latter arrangement the small fraction can be sub-divided into a number of fractions of differing dimensions.

A device for performing the present method is optionally provided with a partition element extending at least partially between the screw conveyors. This partition element may be embodied and positioned in varying ways. The long sides of the partition element can for instance run parallel, or in tapering or stepped manner. The design of the partition element determines the number of fractions and the dimensions thereof.

After removing the long and large fraction from the waste material mass the remaining small fraction is further separated. Separation according to volume takes place in at least two substantially almost concentric drum sieves of differing mesh width, wherein the inner drum is provided with feed means for receiving the small fraction of the waste material mass. The sieves can be net-like but may also be constructed from rods. In this latter case the rods are preferably received at their outer end in substantially rectangular openings, whereby during the rotation movements any material that may be caught between the rods is automatically released. The mesh width decreases towards the outer drum.

The part-fractions separated out in the drum sieves are preferably rid of small light materials. The intermediate part-fraction is preferably supplied for this purpose to a closed channel provided with two outlets and means for generating in the channel an air flow oriented toward one of the outlets for removing polystyrene foam for instance from the fraction. The heavy material falls into a collecting bin while the light material is carried via the air flow into a refuse bag. The largest part-fraction is preferably transported to a rotatable, perforated drum and onto two compartments, wherein air is drawn out of one of the compartments while air is fed to the other compartment. Material that is poured onto the top of the perforated drum first comes into contact with the compartment from which the air is being drawn out. The result is that heavy materials drop downward while light materials such as paper and plastic remain adhered to the drum. Due to the rotating movement of the drum these light materials are transported to the compartment to which air is supplied. Having arrived there they fall off the drum into a bin. It has been found that the heavy materials can be collected in two seperate fractions one of which contains materials with a low weight per volume whereas the other fraction contains materials with a high weight per volume. The rotating movements of the drum causes the heavy materials to bet thrown away therefrom. By varying the peripheral velocity of and underpressure in the drum it can be achieved that lighter materials cover a smaller horizontal distance in the flow of air approaching them than heavier materials do, thereby providing two separate fractions.

The method of the present invention can also for example be used for separating household and industrial waste as well as waste from dredging operations.

Further details and features will become apparent from the annexed drawings, in which:

fig. 1 shows a partly broken away perspective overview of a device for performing the method according to the present invention with building/demolition waste;

fig. 2 is a top view of screw conveyors according to the present invention;

fig. 3 is a side view of screw conveyors according to the present invention; and

fig. 4 is a detail view of screw conveyors with associated knife and push block.

Corresponding reference numerals refer to corresponding components.

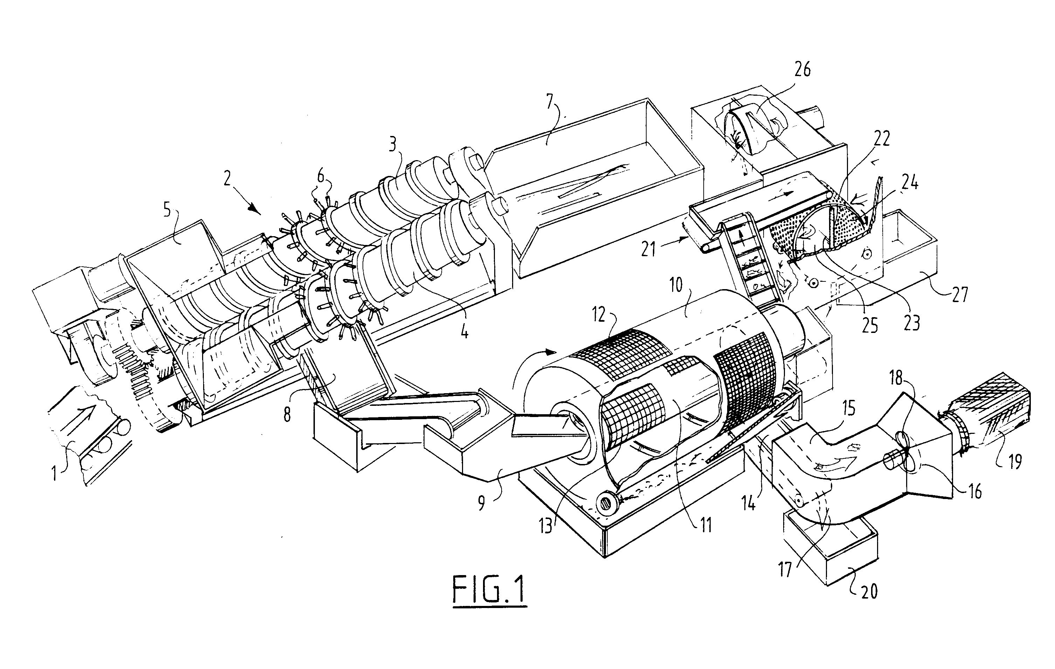

Fig. 1 shows an overview of a device for mechanically separating building/demolition waste into fractions. The building material mass for separating is supplied via a conveyor belt 1 to a pre-separator 2 consisting of two oppositely rotating screw conveyors 3, 4 and poured into a bin 5. Small material falls through between both screw conveyors 3, 4 and is collected in a bin (not shown). The remaining material is transported further. A part of the screw conveyors is provided with pins 6. Long material is caught between the pins 6 and is deflected away from the conveying direction by the rotating movement of the screw conveyors. This long material finishes up alongside the pre-separator 2 and can be carried away therefrom. The remaining portion of the building material mass consisting of large objects finally arrives in a collecting bin 7 at the end of the screw conveyors. Next to the screw conveyors partitions can be placed to avoid the falling-off of the large objects. The small fraction separated out by means of the screw conveyors 3, 4 is guided via a conveyor belt 8 to feed means 9 of two substantially almost concentric drum sieves 10 and 11. The drum sieves 10 and 11 are provided with sieve parts 12, 13 wherein the mesh width of sieve part 12 is smaller than the mesh width of sieve part 13. In the drum sieves 10 and 11 the material is split into three fractions. The intermediate fraction which passes through the sieve 12 enters via a conveyor belt 14 a closed channel 15 provided with two outlets 16 and 17. By means of a fan 18 light material, such as polystyrene foam for example, is drawn off and stored in a refuse bag 19. The remaining, clean material is collected in a bin 20. The intermediate fraction consists of clean rubble. The largest fraction is carried via a conveyor mechanism 21 to the surface of a rotating perforated drum 22 and poured thereon. The inside of the perforated drum 22 is divided by means of a partition 23 into two compartments 24 and 25. By means of a suction device 26 air is drawn out of the compartment 24. Light material that is poured onto the surface of the perforated drum 22 is drawn against the drum surface by the vacuum generated in this compartment. The suction device 26 supplies air to the compartment 25, whereby material sucked into fixed position is released after the drum portion has reached compartment 25. The heavy material which does not remain adhered is in this embodiment of the invention collected in a bin 27. The perforated rotating drum is employed here mainly for removing paper and/or plastic.

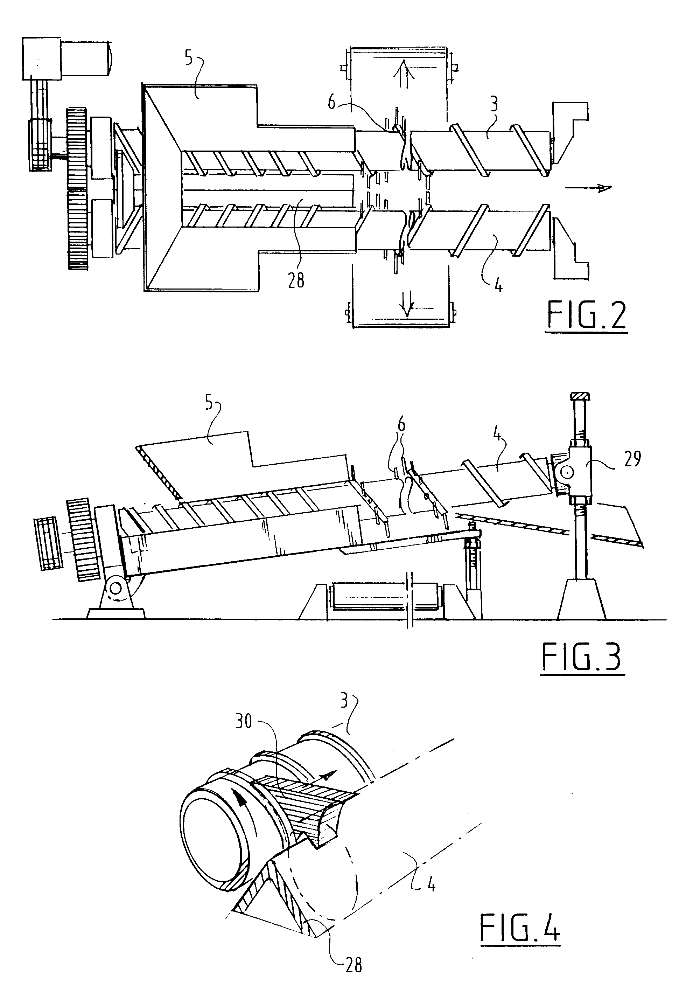

Fig. 2 shows a top view of the screw conveyors 3 and 4 of the pre-separator 2 which are provided with pins 6. Also visible is a partition element 28 which extends at least partially between a portion of the screw conveyors. The presence of the element determines the size of the fraction to be separated. Only material which fits between a screw conveyor and the partition element will fall through between the two. The element can take various forms and can in addition be placed between both screw conveyors in different ways.

Fig. 3 shows a side view of the pre-separator 2 according to the device of fig. 1. The screw conveyors are height-adjustable using an adjusting mechanism 29.

Fig. 4 shows a push block 30 that is used when the forward movement of the building material mass comes to a halt. The push block 30 is displaceable over the screw conveyors and pushes the building material mass forward in this manner. A portion of the partition element 28 is also visible.

## Claims

1. Method for mechanically separating for instance building/demolition waste by first separating from the waste material mass a fraction with small dimensions and subsequently sorting the remaining part of the waste material mass according to length, wherein the separated small fraction is separated in a number of steps according to volume into part-fractions and wherein of at least one of the part-fractions the fraction with the lowest weight is separated.

2. Method as claimed in claim 1, **characterized in that** the separation of the small fraction and sorting according to length take place by carrying the waste material mass over oppositely rotating screw conveyors provided with pins at regular intervals along the periphery.

3. Device for performing the method as claimed in claim 1 or 2.

4. Device as claimed in claim 3, **characterized in that** the screw conveyors (3) enclose a tapering gap.

5. Device as claimed in claim 3 or 4, **characterized by** a partition element (28) extending at least partially between the screw conveyors.

6. Device as claimed in claims 3-5, **characterized by** a push block (30) movable over the screw conveyors.

7. Device as claimed in claims 3-6, **characterized by** at least two substantially almost concentric drum sieves (10, 11) of differing mesh width, wherein the inner drum (11) is provided with feed means for taking up the small fraction of the waste material mass.

8. Device as claimed in claims 3-7, **characterized by** means for supplying a part-fraction to a closed channel (15) provided with two outlets and means (18) for generating in the channel an air flow oriented toward one of the outlets.

9. Device as claimed in claims 3-8, **characterized by** a perforated drum (22) which rotates about a partition (23) and the inside of which is divided by the partition into two compartments (24,25), means (26) for drawing air out of one of the compartments, means (26) for feeding air to the other compartment and means (21) for feeding a part-fraction to the drum surface.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | MUELL UND ABFALL. vol. 22, no. 4, April 1990, BERLIN DE pages 197 - 211; LANGER: 'Erste Erfahrungen mit einer Anlage zur überwiegend maschinellen Sortierung gemischter Baustellenabfälle' * page 202, left column, line 19 - page 203, left column, line 41 * * * page 204, right column, line 5 - line 48; EP 91202129030figures 1,3 * * | 1,3 | B 03 B 9/06 B 07 B 13/07 |
| Y | EP-A-0 265 669 (MASCHINENFABRIK BEZNER GMBH & CO. KG) | 1,3 | |
| A | EP-A-0 339 490 (DEDERICHS) | 1,3,8 | |
| A | DE-A-3 248 493 (LINDEMANN MASCHINENFABRIK GMBH) * page 5, line 1 - line 3 * * * page 8, line 29 - page 11, line 5; figure * * | 1,3 | |
| A | GB-A-2 157 593 (ANSEC DESIGN AND ENGINEERING LTD. (UK)) * page 1, line 65 - page 2, line 87; figures * * | 1-3 | |
| A | DE-A-3 724 240 (PINKL) * column 3, line 9 - line 64; figures * * | 2,3 | **TECHNICAL FIELDS SEARCHED (Int. Cl.5)** B 03 B B 07 B |
| A | FR-A-2 317 971 (LALLEMAND) | 2-4 | |
| A | WO-A-8 502 134 (MINARDI) * page 8, line 14 - line 18 * * * page 12, line 26 - line 34; figures * * | 2-5 | |
| A | DE-A-3 816 721 (KAPUSCHINSKI) * the whole document * * | 7 | |

−/−

The present search report has been drawn up for all claims

| Place of search | Date of completion of search | Examiner |
|---|---|---|
| The Hague | 22 October 91 | VAN DER ZEE W.T. |

European
Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 587 851 (ANDERSON) <br> – – – – – | 9 | |

TECHNICAL FIELDS
SEARCHED (Int. Cl.5)

The present search report has been drawn up for all claims

| Place of search | Date of completion of search | Examiner |
|---|---|---|
| The Hague | 22 October 91 | VAN DER ZEE W.T. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons
                                     
& : member of the same patent family, corresponding
document